Europäisches Patentamt

**European Patent Office**

**Office européen des brevets**

(11) Numéro de publication : **0 165 101**
**B1**

(12) **FASCICULE DE BREVET EUROPÉEN**

(45) Date de publication du fascicule du brevet :
**23.03.88**

(51) Int. Cl.⁴ : **F 25 D 23/00**, F 16 L   3/22

(21) Numéro de dépôt : **85400834.9**

(22) Date de dépôt : **26.04.85**

(54) **Fixation d'un condenseur à une armoire frigorifique.**

(30) Priorité : **18.05.84 FR 8407757**

(43) Date de publication de la demande :
**18.12.85 Bulletin 85/51**

(45) Mention de la délivrance du brevet :
**23.03.88 Bulletin 88/12**

(84) Etats contractants désignés :
**DE FR GB IT NL SE**

(56) Documents cités :
**DE-A- 1 932 816**
**DE-A- 3 121 267**
**FR-A- 1 065 370**
**FR-A- 1 193 282**
**FR-A- 2 243 360**
**FR-A- 2 392 581**
**FR-A- 2 469 636**
**FR-A- 2 479 410**
**GB-A- 2 081 363**
**US-A- 2 250 648**
**US-A- 3 286 963**

(73) Titulaire : **SOCIETE D'ELECTROMENAGER DU NORD SELNOR**
**Avenue des Sports**
**F-59810 Lesquin (FR)**

(72) Inventeur : **Rossi, Camille**
**THOMSON-CSF SCPI 173, bld Haussmann**
**F-75379 Paris Cedex 08 (FR)**
Inventeur : **Mascrez, Paul**
**THOMSON-CSF SCPI 173, bld Haussmann**
**F-75379 Paris Cedex 08 (FR)**

(74) Mandataire : **Phan, Chi Quy et al**
**THOMSON-CSF SCPI 19, avenue de Messine**
**F-75008 Paris (FR)**

## Description

L'invention est relative à une armoire frigorifique comportant des moyens pour la fixation d'un condenseur sur une armoire frigorifique et à une pièce constitutive de ce dispositif.

Les armoires frigorifiques destinées à la réfrigération et/ou à la congélation d'aliments en vue de leur conservation comportent au moins un condenseur, constitué de tubes parallèles entre eux, fixé à l'extérieur sur une paroi de l'armoire frigorifique. Le condenseur a un rôle d'échangeur thermique avec l'air ambiant afin que la production du froid à l'intérieur de l'armoire soit optimale.

Les condenseurs sont placés selon un plan sensiblement vertical et sont éloignés de la paroi de l'armoire sur laquelle ils sont fixés, afin que l'air passant entre la paroi de l'armoire et le condenseur soit utilisé pour l'échange thermique.

Dans ce but, la fixation d'un condenseur est assurée à l'aide de vis. Pour qu'un écartement existe entre la paroi et le condenseur, on intercale, entre le condenseur et la paroi, des entretoises dans lesquelles les vis s'engagent.

Les armoires sont généralement placées devant un mur et le condenseur est habituellement fixé sur la paroi de l'armoire en regard du mur. Il s'agit de la paroi arrière de l'armoire frigorifique.

Afin que le côté du condenseur en regard du mur soit utilisé pour l'échange thermique, on prévoit des cales d'écartement qui viennent en butée contre le mur. Généralement, ces cales sont fixées sur le condenseur, soit à l'aide des mêmes vis que celles servant à assurer la fixation du condenseur sur l'armoire frigorifique, soit avec des vis différentes, mais parfois elles sont indépendantes du condenseur, et sont fixées directement sur la carcasse de l'appareil frigorifique, comme c'est le cas dans le dispositif décrit dans le document FR-A-1 193 282.

La mise en place de ces dispositifs de fixation et de butée présente des inconvénients. Elle nécessite l'emploi de nombreuses pièces et est longue à réaliser.

Il faut en effet prévoir les cales d'écartement, les vis, les entretoises et ensuite positionner correctement toutes ces pièces les unes par rapport aux autres.

Dans d'autres cas, on prévoit, afin d'augmenter l'efficacité de l'échange thermique entre l'air et le condenseur, de placer ce dernier selon un plan légèrement incliné par rapport à la verticale, le bas du condenseur étant plus proche de la paroi sur laquelle il est fixé que le haut, ce qui crée un effet de cheminée.

Il s'ensuit que la partie inférieure du condenseur est plus éloignée du mur que la partie supérieure.

Une telle réalisation entraîne des inconvénients supplémentaires par rapport à ceux présentés par la réalisation précédente.

Il faut en effet prévoir des entretoises différentes pour la fixation en haut et pour la fixation en bas, afin de compenser les distances différentes. Il faut également que les cales d'écartement soient différentes en haut et en bas, et il faut donc que le monteur prenne garde à ne pas intervertir les cales et les entretoises destinées au haut et au bas.

La mise en place d'un tel dispositif est donc longue, et nécessite une attention supplémentaire de la part du monteur.

En outre, certaines armoires frigorifiques possèdent deux condenseurs parallèles entre eux. C'est le cas des versions dites tropicalisées où l'un des deux condenseurs est utilisé en tant que radiateur de l'huile de lubrification du moteur du compresseur frigorifique.

La mise en place du second condenseur pose les mêmes problèmes que la mise en place du premier car il faut prévoir des vis supplémentaires, des entretoises pour maintenir les deux condenseurs à distance l'un de l'autre, etc.

Egalement, afin d'augmenter l'efficacité thermique de l'ensemble, on envisage parfois d'incliner légèrement les deux condenseurs par rapport à la verticale pour créer un effet de cheminée.

Là encore, il faut prévoir des pièces différentes pour la fixation à proximité du sommet de l'armoire frigorifique et pour la fixation à proximité du bas de l'armoire frigorifique, ce qui entraîne des risques d'interversion des différentes pièces nécessaires à la fixation.

Le but de l'invention est d'indiquer une armoire frigorifique qui ne présente pas ces inconvénients.

L'invention a pour objet une armoire frigorifique dont la paroi arrière comporte des moyens supportant au moins un condenseur à distance de cette paroi et des moyens pour maintenir l'ensemble constitué par l'armoire et ledit condenseur à distance d'un mur devant lequel il est placé, caractérisée en ce que les moyens supportant le ou lesdits condenseurs sont constitués par au moins deux pièces monobloc identiques fixées chacune par une première extrémité à ladite paroi arrière, au moins une à proximité du haut de l'armoire et au moins une à proximité du bas de l'armoire, chacune des pièces comportant au moins deux éléments de maintien d'un condenseur situés chacun à une distance différente de la paroi arrière, et en ce que les moyens pour maintenir l'ensemble à distance d'un mur sont des butées, une sur chaque pièce constituée chacune par une seconde extrémité de la pièce opposée à la première par rapport aux éléments de maintien d'un condenseur, de sorte que lesdits éléments de maintien sont entre les deux extrémités.

Ainsi, les différentes pièces servent à la fois de butée et de fixation, et, puisqu'elles possèdent au moins deux éléments de maintien il est possible de placer le condenseur dans au moins deux positions différentes par rapport à une pièce et donc par rapport à l'armoire : il est donc possible de le placer soit verticalement soit obliquement afin d'améliorer l'effet de cheminée.

Mais, puisque chaque pièce possède au moins deux éléments de maintien, il est également possible d'assurer le maintien de deux condenseurs en parallèle comme c'est le cas dans les versions tropicalisées.

En augmentant le nombre d'éléments de maintien, il est encore possible d'augmenter le nombre de condenseurs à maintenir et/ou d'incliner un ensemble de plusieurs condenseurs en utilisant des pièces dont le nombre d'éléments de maintien est supérieur au nombre de condenseurs à maintenir.

Selon une autre caractéristique, les éléments de maintien du condenseur sur une pièce sont des échancrures situées à une distance différente de la paroi, et prévues pour recevoir des portions du tube constitutif du condenseur.

D'autres caractéristiques et avantages de la présente invention apparaîtront avec la description de quelques modes de réalisation faite en regard des figures ci-annexées sur lesquelles :

La figure 1 est une vue de côté d'un réfrigérateur placé le long d'un mur et équipé du dispositif de fixation du condenseur selon l'invention,

La figure 2 est une vue en perspective de l'une des pièces de fixation constitutives du dispositif selon l'invention,

Les figures 3 et 4 sont des vues en perspective des pièces de fixation de l'invention coopérant de deux façons différentes avec le condenseur.

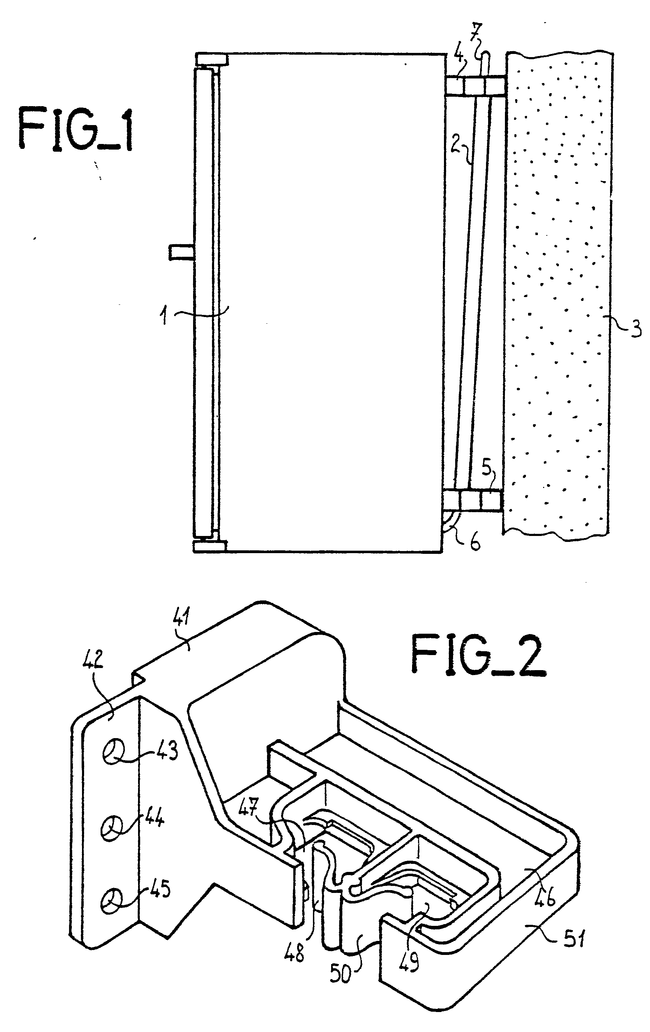

Sur la figure 1, un réfrigérateur 1 auquel est associé un condenseur 2 est à proximité d'un mur 3. Le condenseur 2 est fixé à l'armoire frigorifique, dans l'exemple, à l'aide de quatre pièces 4, 5 placées à proximité des coins supérieurs et inférieurs du condenseur. Cette figure est une vue de côté, et seulement un coin inférieur et un coin supérieur du condenseur sont visibles, ainsi que les pièces de fixation supérieure 4 et inférieure 5 correspondantes.

Le condenseur 2, dans l'exemple représenté, est légèrement incliné par rapport au plan vertical déterminé par la paroi arrière de l'armoire et par le mur 3. La pièce 4 de fixation au sommet du condenseur 2 coopère avec un élément 7 du tube constitutif de celui-ci comme il sera montré ultérieurement. La pièce 5 de fixation au bas du condenseur 2 coopère avec un élément 6 du tube constitutif de celui-ci. Dans un mode de réalisation, cet élément est un tube qui relie le condenseur au compresseur frigorifique non représenté.

Comme on le voit sur cette figure, les pièces 4 et 5 assurent également la butée contre le mur 3.

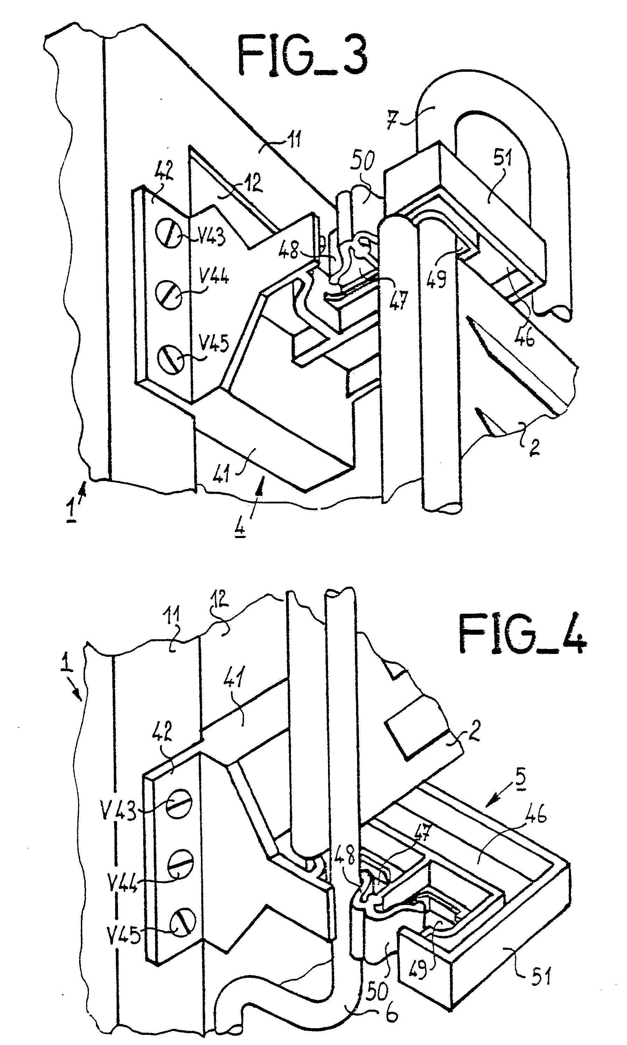

La figure 2 montre en perspective une pièce de fixation constituant l'élément essentiel du dispositif de l'invention.

Cette pièce est constituée d'un socle 41 prolongé sur l'un de ses côtés par un méplat 42 percé de trous 43, 44, 45 destinés à recevoir des vis permettant la fixation de la pièce à l'armoire frigorifique.

Le socle 41 est prolongé, perpendiculairement au plan principal du méplat 42, par un bras 46, dont l'extrémité 51 opposée au socle est plate et est parallèle au plan principal du méplat 42, de façon à servir de butée contre le mur devant lequel se trouve l'armoire frigorifique.

Entre l'extrémité 51 servant de butée et le socle 41, du côté du méplat 42, le bras comporte dans l'exemple représenté deux ensembles 47, 48 et 49, 50 destinés à maintenir fermement le condenseur.

Chaque ensemble de maintien est constitué d'une échancrure 47, 49 partiellement ouverte du côté du bras 46 adjacent au méplat 42. Des languettes déformables 48, 50 obturent partiellement l'entrée des échancrures 47, 49.

Lors de l'introduction d'un tube, ces languettes 48, 50 se déforment par élasticité et reviennent à leur position initiale quand le tube est totalement entré dans l'échancrure, empêchant alors son retrait.

De préférence, la pièce de fixation est réalisée par moulage d'une matière plastique.

La pièce de fixation peut également être réalisée en tout autre matériau permettant que les languettes 48, 50 se déforment par élasticité et reviennent à leur position initiale.

Les figures 3 et 4 montrent respectivement le montage de la partie du condenseur proche du sommet de l'armoire et de la partie du condenseur proche du bas de l'armoire.

Sur les figures 3 et 4, les pièces de maintien 4, 5 sont fixées respectivement à proximité du sommet de l'armoire et du bas de l'armoire, à l'aide de vis $V_{43}$, $V_{44}$, $V_{45}$ engagées dans les trous 43, 44, 45 du méplat 42 de chaque pièce.

Ces pièces sont fixées sur la paroi de l'armoire en regard de laquelle doit se trouver le condenseur 2. Les pièces sont vissées sur la carcasse 11 de l'armoire. Le socle 41 de chaque pièce est en appui sur la paroi arrière 12 de l'armoire.

Dans l'exemple, le condenseur 2 est incliné par rapport au plan vertical déterminé par la paroi arrière 12 de l'armoire frigorifique.

Pour cela, comme le montre la figure 3, un tube 7 constitutif du condenseur 2 est engagé dans l'échancrure 49 la plus proche de l'extrémité 51 de la pièce 4 servant de butée et de fixation à la partie haute de l'armoire. La languette déformable 50 empêche son retrait. L'échancrure 47 est laissée libre.

De l'autre côté de l'armoire, au même niveau, sur la carcasse, se trouve une autre pièce 4 de maintien semblable, et une portion de tube est engagée dans l'échancrure correspondante.

Comme le montre la figure 4, qui représente la fixation en bas de l'armoire, une portion 6 de tube, par exemple le tube qui est relié au compresseur (non représenté), est engagée dans l'échancrure 47 la plus proche du socle 41. La languette déformable 48 correspondante empêche le retrait de cette portion 6 de tube. L'échancrure 49 est laissée libre.

De l'autre côté de l'armoire, au même niveau, se trouve également une pièce 5 fixée de façon semblable et une portion de tube du condenseur 2 est engagée dans l'échancrure correspondante.

Ainsi, grâce aux diverses figures qui viennent d'être décrites, on constate que l'inclinaison, le maintien, et la butée le long d'un mur sont assurés par un dispositif constitué de pièces identiques et monobloc, fixées en plusieurs points de la carcasse de l'armoire frigorifique, sur la paroi arrière de celle-ci.

L'inclinaison ou bien encore le positionnement vertical du condenseur sont permis grâce à la présence sur une même pièce d'au moins deux échancrures 47, 49 situées à des distances différentes du socle de la pièce 4 ou 5.

Dans l'exemple représenté, il n'existe que deux échancrures par pièce mais il est facile d'en augmenter sensiblement le nombre, pour multiplier les possibilités de positionnement du condenseur 2.

Le positionnement selon un plan vertical du condenseur est assuré en engageant les portions de tube dans les échancrures semblables des pièces situées en haut et en bas de l'armoire.

Le maintien ferme du condenseur est assuré grâce à la coopération des échancrures et des languettes déformables de blocage.

La mise en place d'un condenseur à l'aide de telles pièces est très simple : il suffit de fixer les pièces 4, 5 à l'aide des vis, puis d'engager des portions de tube du condenseur dans les échancrures souhaitées.

Les pièces représentées sur les figures 2 à 4 possèdent chacune deux ensembles échancrures 47, 49 languettes 48, 50 pour le maintien d'une partie de condenseur.

Ces pièces peuvent donc être utilisées sur les versions tropicalisées d'armoires frigorifiques pour le maintien et la fixation de deux condenseurs, parallèlement l'un à l'autre et à la paroi de l'armoire frigorifique près de laquelle ils sont fixés.

La mise en place des deux condenseurs est assurée de la manière suivante : au moins quatre pièces de fixation (deux à proximité du sommet, deux à proximité de la base) sont placées sur l'armoire. Le condenseur destiné à être le plus proche de la paroi 12 de l'armoire est mis en place dans les échancrures 47 les plus proches de la paroi, puis bloqué grâce aux languettes 48 correspondantes, puis le second condenseur est mis en place dans les échancrures 49 les plus éloignées de la paroi 12 et bloqué grâce aux languettes 50 correspondantes.

On comprend très bien que pour fixer plusieurs condenseurs de façon inclinée, il suffit de réaliser et d'utiliser des pièces possédant un nombre d'échancrures et de languettes supérieur au nombre de condenseurs à maintenir.

Par exemple, pour incliner un ensemble de deux condenseurs, il faut utiliser des pièces possédant au moins trois ensembles échancrures-languettes.

Le temps de pose est ainsi réduit, car le monteur ne risque pas d'intervertir les pièces, étant donné qu'elles sont toutes identiques. En outre, étant donné qu'une même pièce assure les fonctions de maintien et de butée, une armoire frigorifique dont le ou les condenseurs sont fixés à l'aide de telles pièces a un prix de revient diminué par rapport aux armoires frigorifiques dont le ou les condenseurs sont fixés à l'aide des multiples pièces de l'art antérieur.

**Revendications**

1. Armoire frigorifique (1) dont la paroi arrière (12) comporte des moyens supportant au moins un condenseur (2) à distance de cette paroi et des moyens pour maintenir l'ensemble constitué par l'armoire et ledit condenseur à distance d'un mur (3) devant lequel il est placé, caractérisée en ce que les moyens supportant le ou lesdits condenseurs sont constitués par au moins deux pièces (4, 5) monobloc identiques fixées chacune par une première extrémité à ladite paroi arrière (12), au moins une (4) à proximité du haut de l'armoire et au moins une (5) à proximité du bas de l'armoire, chacune des pièces comportant au moins deux éléments (47, 49) de maintien d'un condenseur situés chacun à une distance différente de la paroi arrière (12), et en ce que les moyens pour maintenir l'ensemble à distance d'un mur (3) sont des butées (51), une sur chaque pièce constituée chacune par une seconde extrémité de la pièce opposée à la première par rapport aux éléments de maintien d'un condenseur (2), de sorte que lesdits éléments de maintien (47, 49) sont entre les deux extrémités.

2. Armoire frigorifique selon la revendication 1, caractérisée en ce qu'elle comporte quatre pièces (4, 5) monobloc identiques, fixées sur sa paroi (12) arrière, et en ce que deux de ces pièces (4) sont fixées à proximité du sommet de la paroi (12) de l'armoire, et maintiennent la partie supérieure d'un condenseur, et en ce que les deux autres pièces (5) sont fixées à proximité de la base de la paroi (12) de l'armoire, et maintiennent la partie inférieure d'un condenseur.

3. Armoire frigorifique selon l'une quelconque des revendications 1 ou 2, caractérisée en ce que chaque pièce (4, 5) comporte deux éléments (47, 49) de maintien d'un condenseur, de façon à permettre le maintien, parallèlement à la paroi (12) de l'armoire frigorifique, d'un seul ou de deux condenseurs ou le maintien oblique, par rapport à la paroi, d'un seul condenseur (1).

4. Armoire frigorifique selon l'une quelconque des revendications 1 ou 2, caractérisée en ce que chaque pièce (4, 5) comporte trois éléments (47, 49) de maintien d'un condenseur, de façon à permettre le maintien, parallèlement à la paroi (12), d'un ou de deux condenseurs, ou le maintien oblique, par rapport à la paroi, d'au moins deux condenseurs.

5. Armoire frigorifique selon la revendication 1, caractérisée en ce que les éléments (47, 49) de maintien d'un condenseur (2) sur la pièce (4, 5) sont des échancrures qui reçoivent une portion (6, 7) du tube constitutif dudit condenseur (2).

6. Armoire frigorifique selon la revendication 5, caractérisée en ce que chaque échancrure (47, 49) comporte des moyens (48, 50) pour empêcher le retrait de la portion de tube du condenseur (2) après sa mise en place dans l'échancrure (47, 49) correspondante.

7. Armoire frigorifique selon la revendication 6, caractérisée en ce que les moyens (48, 50) sont des languettes situées à l'entrée de chaque échancrure (47, 49), et prévues pour se déformer élastiquement lors de l'introduction d'une portion (6, 7) de tube du condenseur (2), et pour revenir en place après l'introduction de ladite portion de tube et empêcher ainsi son retrait.

8. Armoire frigorifique selon l'une quelconque des revendications 5 à 7, caractérisée en ce que chaque pièce (4, 5) comporte un socle (41), un méplat (42) prolongeant un côté dudit socle, et un bras (46) perpendiculaire au plan principal du méplat (42), bras sur lequel sont placées les échancrures (47, 49) et les languettes élastiques (48, 50) et en ce que l'extrémité (51) opposée au socle formant butée est plate et parallèle au plan principal du méplat.

9. Armoire frigorifique selon la revendication 8, caractérisée en ce que les échancrures (47, 49) et les languettes (48, 50) élastiques sont placées sur le côté du bras (46) adjacent au méplat (42).

10. Armoire frigorifique selon l'une quelconque des revendications 8 ou 9, caractérisée en ce que le méplat (46) comprend au moins un orifice (43, 44, 45) pour le passage d'une vis ($V_{43}$, $V_{44}$, $V_{45}$) de fixation à la carcasse (11) de l'armoire frigorifique (1).

## Claims

1. A refrigerator (1) the rear wall (12) of which is equipped with means for keeping at least one condenser (2), and for keeping the refrigerator and the condenser off the wall (3) where it is placed, characterized in that the means for keeping at distance the condenser(s) consist of at least two identical monobloc armatures (4, 5) each of which is fixed by a first end to the said rear wall (12) and of which at least one (4) is mounted near the upper part of the refrigerator whereas the other (5) is mounted at the lower part of the refrigerator, each having at least two supporting elements (47, 49) for a condenser assuming different distances to the rear wall (12) ; and in that the means for keeping the refrigerator and the condenser off the wall (3) take the form of stoppers (51), one on each armature, consisting of a second end opposite to the first one in relation to the supporting elements (47, 49), in such a way that the supporting elements (47, 49) are contained between the two ends.

2. A refrigerator according to claim 1, characterized in that it comprises four identical monobloc armatures mounted to the rear wall (12), of which two (4) are mounted near the upper part of the rear wall (12) and intended to support the upper part of a condenser, whereas the other two armatures (5) are mounted near the lower part of the rear wall (12) and intended to support the lower part of the condenser.

3. A refrigerator according to one of claims 1 or 2, characterized in that each armature (4, 5) comprises two elements (47, 49) for supporting a condenser, in such a way that it is possible to support one or two condensers in a position parallel to the rear wall (12) of the refrigerator, or one condenser in an inclined position to the rear wall.

4. A refrigerator according to one of claims 1 or 2, characterized in that each of the armatures (4, 5) comprises three elements (47, 49) for supporting a condenser, in such a way that it is possible to support one or two condensers in a position parallel to the rear wall (12), or to support at least two condensers in an inclined position to the rear wall.

5. A refrigerator according to claim 1, characterized in that the condenser supporting elements (47, 49) of the armatures (4, 5) take the form of arched grips which accommodate a portion of the tube (6, 7) forming the condenser (2).

6. A refrigerator according to claim 5, characterized in that each of the arched grips (47, 49) comprises means (48, 50) which prevent the extraction of the tube portion of the condenser (2) after its location within the arched grips (47, 49).

7. A refrigerator according to claim 6, characterized in that the means assume the form of tongues disposed at the entry of the arched grips (47, 49) and being intended to deform elastically during insertion of the tube portions (6, 7) of the condenser to resume their initial position after insertion, thereby preventing the extraction of the tube portion.

8. A refrigerator according to one of claims 5 to 7, characterized in that each armature (4, 5) consists of a base plate (41), a flange (42) forming a lateral extension of the base and an arm (46) disposed vertically to the flange plane, the flange serving to bear the arched grips (47, 49) and the elastic tongues (48, 50), and in that the stopper opposite to the base plate is flat and disposed in parallel to the plane of the base plate.

9. A refrigerator according to claim 8, characterized in that the arched grips (47, 49) and the elastic tongues (48, 50) are disposed at the part of the arm adjacent to the flange (42).

10. A refrigerator according to one of claims 8 or 9, characterized in that the flange (46) comprises at least one hole (43, 44, 45) for receiving a screw for fixing the flange at the frame (11) of the refrigerator.

## Patentansprüche

1. Kühlschrank (1) dessen Rückwand (12) Mittel zur Abstandshaltung für mindestens einen Kondensator (2) und Mittel zur Abstandshaltung von Schrank und Kondensator von der Stellwand (3) vor der sie stehen, aufweist, dadurch gekennzeichnet, daß die Mittel zur Abstandshaltung des oder der Kondensatoren aus mindestens zwei identischen Monoblockteilen (4, 5) bestehen, von denen jedes mit einem ersten Berührungsende an der genannten Rückwand (12) befestigt ist, wobei mindestens eines der Monoblockteile (4) nahe dem Kopfende des Schrankes und mindestens eines (5) nahe dem Fußende des Schrankes angeordnet ist, und von denen jedes mindestens zwei Halterungselemente (47, 49) für einen Kondensator aufweist, welche einen unterschiedlichen Abstand zur Rückwand (12) einnehmen, und daß weiter die Mittel zur Abstandshaltung des Ganzen von der Stellwand (3) als Anschläge (51) ausgebildet sind, und zwar je Element ein Anschlag, wobei jeder durch ein zweites, bezogen auf die Halterungselemente des Kondensators (2) dem ersten Berührungsende (41) gegenüberliegendes, Berührungsende gebildet wird, derart, daß sich die genannten Halterungselemente (47, 49) zwischen den beiden Enden befinden.

2. Kühlschrank nach Anspruch 1, dadurch gekennzeichnet, daß er vier an der Rückwand (12) montierte identische Monoblockteile aufweist, wovon zwei (4) nahe dem Kopfende der Schrankrückwand (12) befestigt sind und den oberen Teil eines Kondensators halten, während die anderen beiden Teile (5) nahe dem Fußende der Schrankrückwand (12) befestigt sind und den unteren Teil des Kondensators halten.

3. Kühlschrank nach einem der Ansprüche 1 oder 2, dadurch gekennzeichnet, daß jedes der Teile (4, 5) zwei Elemente (47, 49) zur Halterung eines Kondensators aufweist, dergestalt, daß die Halterung eines einzigen oder zweier Kondensatoren parallel zur Rückwand (12) des Kühlschranks, oder die Halterung eines einzigen Kondensators (1) in geneigter Stellung zur Rückwand möglich ist.

4. Kühlschrank nach einem der Ansprüche 1 oder 2, dadurch gekennzeichnet, daß jedes der Teile (4, 5) drei Elemente (47, 49) zur Halterung eines Kondensators aufweist, dergestalt, daß die Halterung eines oder zweier Kondensatoren parallel zur Rückwand (12) oder die Halterung mindestens zweier Kondensatoren in geneigter Stellung zur Rückwand möglich ist.

5. Kühlschrank nach Anspruch 1, dadurch gekennzeichnet, daß es sich bei den Kondensatorhalterungselementen (47, 49) der Teile (4, 5) um Bogenelemente handelt, die einen Abschnitt des den Kondensator (2) bildenden Rohrstranges (6, 7) aufnehmen.

6. Kühlschrank nach Anspruch 5, dadurch gekennzeichnet, daß jedes Bogenelement (47, 49) Mittel (48, 50) aufweist, die eine Herausnahme des Rohrabschnittes des Kondensators (2) nach seiner Anbringung in den entsprechenden Bogenelementen (47, 49) verhindern.

7. Kühlschrank nach Anspruch 6, dadurch gekennzeichnet, daß es sich bei den Mitteln (48, 50) um Zungen handelt, die im Eingang der Bogenelemente (47, 49) angeordnet und dazu bestimmt sind, sich bei der Einführung der Rohrabschnitte (6, 7) des Kondensators elastisch zu verformen, nach der Einführung wieder in ihre Ausgangsstellung zurückzukehren und so die Herausnahme zu verhindern.

8. Kühlschrank nach einem der Ansprüche 5 bis 7, dadurch gekennzeichnet, daß jedes der Teile (4, 5) aus einem Sockel (41), einem Flansch (42) als Seitenverlängerung des Sockels und einem Arm (46) senkrecht zur Flanschfläche besteht, wobei auf dem Arm die Bogenelemente (47, 49) und die elastischen Zungen (48, 50) angebracht sind, und daß das dem Sockel gegenüberliegende Anschlagsende (51) flach und parallel zur Flanschfläche liegend ausgebildet ist.

9. Kühlschrank nach Anspruch 8, dadurch gekennzeichnet, daß die Bogenelemente (47, 49) und die elastischen Zungen (48, 50) auf der dem Flansch (42) benachbarten Seite des Armes (46) angeordnet sind.

10. Kühlschrank nach einem der Ansprüche 8 oder 9, dadurch gekennzeichnet, daß der Flansch (46) mindestens eine Bohrung (43, 44, 45) zum Durchstecken einer Befestigungsschraube für seine Befestigung am Rahmen (11) des Kühlschrankes aufweist.

FIG_1

FIG_2

# FIG_3

# FIG_4